# EUROPEAN PATENT SPECIFICATION

(11) **EP 2 203 670 B1**
(45) Date of publication and mention of the grant of the patent: **24.06.2015**
(21) Application number: 07844386.8
(22) Date of filing: 18.10.2007
(51) Int. Cl.: F16L 3/08, F16L 23/04, F16L 47/14, F16K 7/06

(54) **SANITARY CLAMP**
KLEMME FÜR SANITÄREINRICHTUNGEN
PINCE SANITAIRE

(43) Date of publication of application: 07.07.2010
(73) Proprietor: Johnson, Theodore D., Clearwater, FL 33764 (US); Boley-Johnson, Robin, Clearwater, Florida 33764 (US)
(72) Inventor: Johnson, Theodore D., Clearwater, FL 33764 (US); Boley-Johnson, Robin, Clearwater, Florida 33764 (US)
(74) Representative: Chaillot, Geneviève
(86) International application number: PCT/US2007/081755
(87) International publication number: WO 2009/051591

(56) References cited:
- DE-A1- 3 111 997
- FR-A- 722 912
- GB-A- 886 036
- US-A- 3 359 018
- US-A- 4 417 755
- US-A- 4 527 818
- US-A- 4 823 442
- US-A- 6 139 069
- US-A1- 2004 094 958
- US-A1- 2005 279 893
- US-A1- 2007 209 164
- US-B1- 6 367 849
- US-B1- 7 284 731

## Description

### BACKGROUND OF THE INVENTION

### 1. Field of the Invention

This invention relates, generally, to clamps for sanitary fittings. More particularly, it relates to a clamp for clamping together two sanitary fittings with a force that is predetermined and which may be duplicated repeatedly.

### 2. Description of the Prior Art

Conventional sanitary clamps are typically made of stainless steel, a rigid plastic, or a combination of such materials. In a first well-known design, two semicircular parts are hingedly connected to one another at a first end and their free ends are secured to one another by a threaded stem and nut. In another well-known embodiment, the two semicircular sections are secured to one another by a flexible steel or plastic band that circumscribes them. A mechanism of the type commonly used on hose clamps pulls the semicircular parts toward one another by tightening the band via rotation of a worm gear that meshingly engages slots formed in the flexible band. US 4,527,818 describes such a clamp and discloses the preamble of claim 1.

The primary drawback of the known clamps is that they include no means for applying an optimal amount of force. Accordingly, they are usually over-tightened. Over-tightening is particularly undesirable when a plastic fitting is used because the fitting may buckle. Such buckling can compromise the fluid tightness and the pressure resistance of the connection.

A closely related drawback is that the force applied by the known clamps is not repeatable. Thus, if a prior art clamp is tightened by an optimal force-providing amount, by luck, there is no means for repeating such optimal tightening the next time a clamp of the same structure is used.

There is a particular type of commercially available sanitary clamp that includes a torque indicator in a threaded closure nut that overcomes the over-tightening problem. However, this is a relatively expensive solution to the problem.

A conventional torque wrench may also be used to overcome the over-tightening problem. However, such wrenches are cumbersome and inconvenient to use.

Another drawback associated with sanitary fittings that are tightened with torque wrenches is that the installation is not tamper-evident. A torque wrench on a simple screw clamp, even if it is incorporated into the clamp, is easily opened. If the sanitary fitting is opened and tampered with and re-closed with a torque wrench, there is no evidence of such tampering

Moreover, the amount of tension applied to the clamp cannot be checked by visual inspection after the torque wrench has been removed.

What is needed is an inexpensive clamp that may be tightened repeatedly and consistently to an optimal tightness but that does not require an internal torque indicator in a threaded closure nut or use of a torque wrench.

There is also a need for a tamper-evident installation.

A need is also extant for an installation that provides a visual indication of whether or not a sanitary fitting has been properly tightened.

However, in view of the prior art taken as a whole at the time the present invention was made, it was not obvious to those of ordinary skill how the identified needs could be fulfilled.

### SUMMARY OF THE INVENTION

The long-standing but heretofore unfulfilled need for a means for an improved clamp for sanitary fittings is now met by a new, useful, and non-obvious invention. The novel clamp includes an elongate, flexible cable tie and a first semicircular clamp part having an interior, concave side and an exterior, convex side. A first inner channel is formed in the interior, concave side of the first semicircular clamp part. The novel structure further includes a second semicircular clamp part having an interior, concave side and an exterior, convex side. A second inner channel is formed in the interior, concave side of the second semicircular clamp part.

The first and second inner channels are adapted to accommodate a flange of a sanitary fitting when the first and second semicircular parts are disposed in confronting relation to one another.

The elongate, flexible cable tie has a length sufficient to circumscribe the first and second semicircular parts when the first and second semicircular parts are disposed in confronting relation to one another. The cable tie further includes a cable tie catch at a proximal end thereof and a free end at a distal end thereof. The cable tie catch is adapted to slidingly receive the free end when the elongate, flexible cable tie is disposed in circumscribing relation to the confronting first and second semicircular parts.

In a first embodiment, a first distance mark is imprinted or otherwise formed on the flexible cable tie at a predetermined location thereon near said distal free end. A second distance mark is imprinted or otherwise formed on the flexible cable tie at a predetermined location thereon near said proximal end. The first distance mark is in registration with the second distance mark when the elongate, flexible cable tie is under a predetermined amount of tension. The same amount of tension is therefore consistently applied to the elongate, flexible cable tie by tightening the cable tie until the first and second distance marks are in registration with one another.

In a second embodiment, the second distance mark is a predetermined edge of said catch so that the clamp is optimally tightened when the first distance mark is in alignment with said predetermined edge of said catch.

The first inner channel extends from a first end of the first semicircular clamp part to a second end of the first semicircular clamp part and the second inner channel extends from a first end of the second semicircular clamp part to a second end of the second semicircular clamp part.

A first exterior channel is formed in the exterior, convex side of the first semicircular clamp part and a second exterior channel is formed in the exterior, convex side of the second semicircular clamp part. The elongate, flexible cable tie is received within the first and second exterior channels when the flexible cable tie is disposed in said circumscribing relation to the first and second semicircular parts.

The first and second inner channels each have a flat bottom and opposed sidewalls that taper toward one another from top to bottom. A pair of axially aligned sanitary fittings are therefore pushed in converging relation toward one another by the opposed sidewalls of the first and second inner channels when the confronting semicircular parts are pushed toward one another as the flexible cable tie is tightened.

Alternatively, the first and second inner channels may have an arch-shape in lieu of the tapered sidewalls and flat bottom shape. A pair of axially aligned sanitary fittings is pushed in converging relation toward one another by the arch-shape of the first and second inner channels when the confronting semicircular parts are pushed toward one another as the flexible cable tie is tightened.

An important advantage of the novel structure is that it enables the clamp to be tightened to a predetermined optimal amount.

Moreover, the tightening to said optimal amount is repeatable any number of times.

The alignment of first and second distance marks on opposite ends of the cable tie provides an effective way to visually ascertain when the cable tie is properly tightened, as does the provision of a single distance mark and its alignment with a predetermined edge of the catch.

Moreover, if a cable tie is of the non-reusable type, any cutting thereof is readily apparent. Thus, a non-reusable cable tie provides evidence of tampering if it is tampered with.

If the cable tie is of the reusable type, it may be reused multiple times.

These and other advantages will become apparent as this disclosure proceeds. The invention includes the features of construction, arrangement of parts, and combination of elements set forth herein, and the scope of the invention is set forth in the claims appended hereto.

### BRIEF DESCRIPTION OF THE DRAWINGS

For a fuller understanding of the nature and objects of the invention, reference should be made to the following detailed description, taken in connection with the accompanying drawings, in which:
Fig. 1 is a perspective view of the novel clamp in an "open" configuration;
Fig. 2 is a perspective view of the novel clamp in a "closed" configuration;
Fig. 3 is a perspective view of the novel clamp in a "closed" configuration relative to a sanitary fitting;
Fig. 4 is a perspective view of the novel clamp in a "closed" configuration and with the flexible band removed;
Fig. 5 is a perspective view of the flexible band in a locked configuration;
Fig, 6 is a perspective view depicting each of the two primary parts of the clamp disposed in a non-functional relationship to one another;
Fig, 7 is a perspective view of one of the primary parts that includes a view of part of the outer channel formed therein;
Fig. 8 is a perspective view like that of Fig. 6 but depicting a second embodiment of the invention; and
Fig. 9 is a perspective view like that of Fig, 8 but depicting a third embodiment.of the invention.

### DETAILED DESCRIPTION OF THE PREFERRED EMBODIMENT

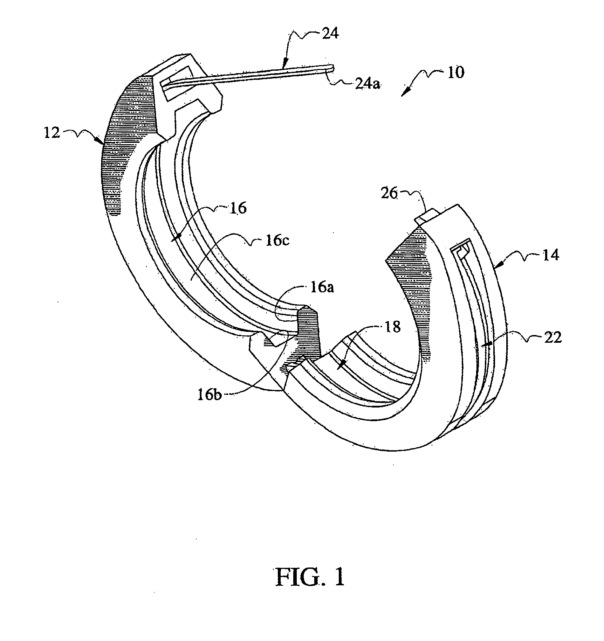

Referring now to Fig. 1, it will there be seen that an illustrative embodiment of the invention is denoted as a whole by the reference numeral 10.

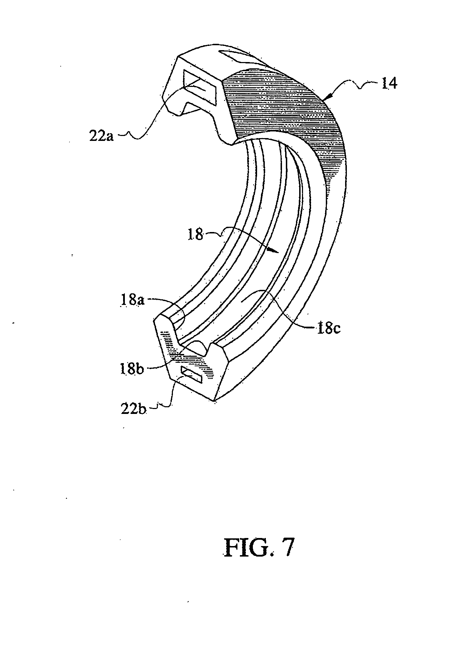

Clamp 10 includes primary parts 12 and 14 of semicircular construction. Interior channel 16 is formed in the concave side of semicircular part 12 and includes tapered sidewalls 16a, 16b that converge toward one another, and flat bottom 16c. Interior channel 18 is formed in the concave side of semicircular part 14 and includes flat, tapered sidewalls 18a, 18b that converge toward one another, and flat bottom 18c. The sidewalls and flat bottom are not numbered in Fig. 1 to avoid cluttering the drawings; they may be seen in Fig. 7. Tapered walls 16a, 16b, 18a, 18b engage the longitudinally spaced apart flanges of a pair of abutting sanitary fittings, not depicted in Fig. 1, and drive said opposed flanges toward one another in an axial direction as the clamp is tightened.

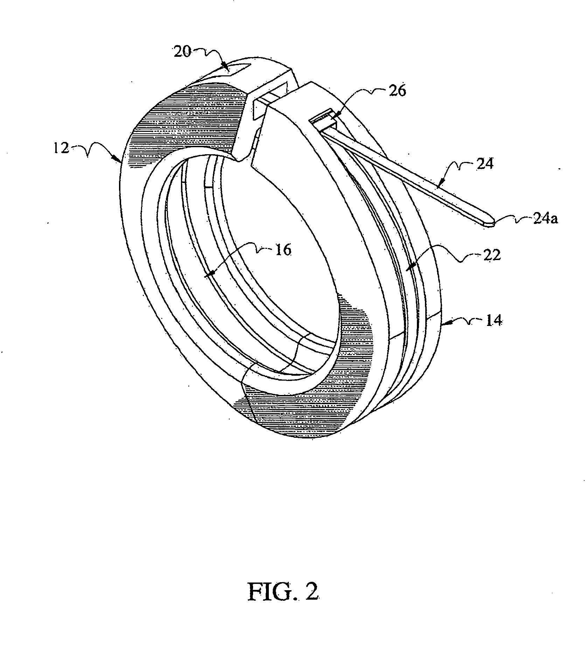

Fig. 1 also depicts exterior channel 22 formed on the convex side of semicircular part 14. Exterior channel 22 has vertical sidewalls and a flat bottom wall but said parts are not numbered to avoid cluttering the drawings. Exterior channel 20 is not depicted in Fig. 1 but a short extent thereof is depicted in Fig. 2. Exterior channel 20 is formed on the convex side of semicircular part 12 and its construction is the same as that of exterior channel 22. In a preferred embodiment of the invention, a flexible band or cable tie 24 fits into exterior channels 20, 22 and circumscribes said semicircular parts 12, 14. However, the exterior channels are not required; the flexible cable tie works as long as it circumscribes the semicircular parts. The exterior channels prevent flexible cable tie 24 from sliding off clamp 10.

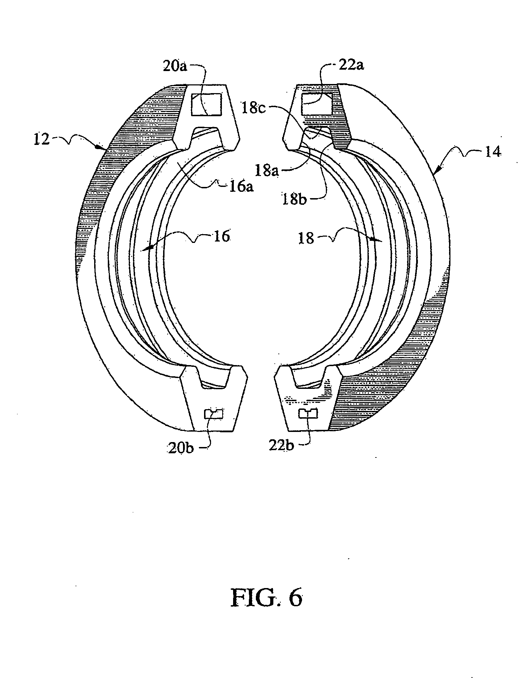

Unlike interior channels 16, 18, which extend the entire extent of the semicircular part within which they are formed, exterior channels 20, 22 extend almost the entire extent of their associated semicircular parts but stop short thereof at both ends. Accordingly, each channel 20, 22 forms a short tunnel, referred to hereinafter as a belt loop to better indicate its function, at its opposite ends as may be determined from Figs. 1-4 but which is best depicted in Fig. 6. Note in Fig. 6 that belt loops 20a and 22a are larger than their counterparts 20b and 22b. This is because the smaller belt loops 20b, 22b are sized to slidingly receive the elongate medial part of flexible cable tie 24 and the larger belt loops 20a, 22a are sized to receive a cable tie head or catch member 26, at the proximal end of the cable tie, that engages free end 24a at the distal end of said flexible cable tie 24.

If catch 26 is of the non-releasable type, flexible cable tie 24 cannot be removed from circumscribing relation to clamp 10 unless said cable tie 24 is cut. A cut cable tie thus indicates tampering. If catch 26 is of the releasable type, then it could be tampered with. It follows that the non-releasable type of catch is preferred.

Belt loops 20a, 20b and 22a, 22b are not required to be formed at the opposite ends of their respective exterior channels 20, 22 as depicted. To function well, belt loops 20a, 20b merely need to be circumferentially spaced apart from one another and belt loops 22a, 22b need such spacing as well. Accordingly, said belt loops could be circumferentially spaced apart from one another and from the respective opposite ends of semicircular parts 12, 14. However, their function is more apparent to a user when they are positioned at the opposite ends of their respective exterior channels.

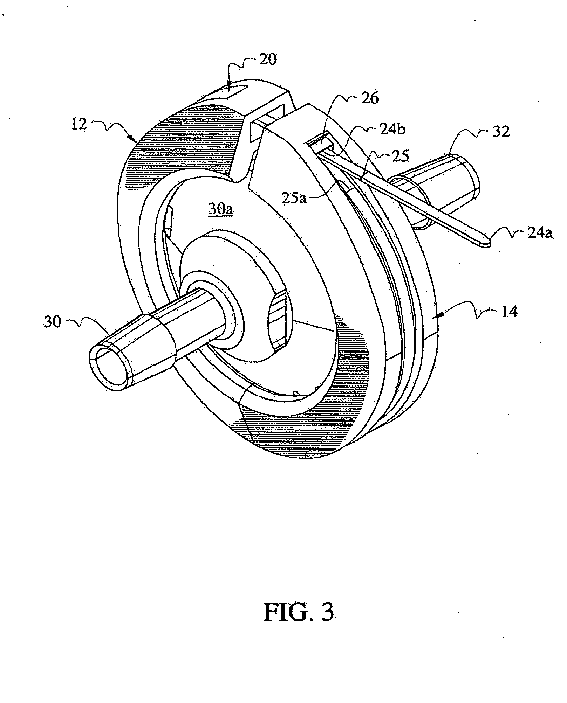

Fig. 3 depicts a first sanitary fitting 30 having flange 30a and a second sanitary fitting 32 having a similar flange, not depicted. Free end 24a of flexible cable tie 24 has been pulled through catch 26 to bring the first opposed ends of semicircular parts 12, 14 in close proximity to one another. As mentioned earlier, the tapered sidewalls of the interior channels drive the opposed flanges axially toward one another as desired as cable tie 24 is tightened. The amount of tightening required is predetermined and a first distance mark 25 is imprinted upon cable tie 24 near its distal free end 24a. In a first embodiment, a second distance mark 25a is imprinted on cable tie 24 at a predetermined location near its proximal end. A user pulls free end through catch 26 until first distance mark 25 is in registration with second distance mark 25a. The user stops pulling when said first and second distance marks are in alignment with one another so as not to over-tighten said flexible cable tie. This eliminates the need for a built-in torque nut or a torque wrench.

Placing the first distance mark on the cable tie in registration with the second distance mark on the cable tie to apply an optimal amount of tension to said cable tie, and hence the optimal amount of axially-directed closing force to the sanitary fitting, enables the user to perform the same operation repeatedly with other flexible cable ties on different sanitary fittings, with the amount of tension on the cable tie or converging axial force on the sanitary fittings always being substantially the same.

The use of the first and second distance marks in the manner just described is one of several ways to ensure a repeatable, optimal tightening of the cable tie. The second distance mark could be eliminated and a predetermined edge of catch 26 could represent the second distance mark. The position of the first distance mark would be predetermined so that the user would feed the distal end of the cable tie through catch 26 until the first distance mark near the distal end of said cable tie was in alignment with the predetermined edge of catch 26. This alignment of the first distance mark and said predetermined edge would produce the required tension in the cable tie and converging axial force in the sanitary fittings.

Sanitary fittings are mass-produced and the fittings of each class or type of sanitary fittings share the same structural characteristics as the other fittings of its type. Accordingly, the optimal force to tighten the fittings of each type is known. Thus, the flexible ties of each class or type of sanitary fitting are pre-marked, either with two distance marks that are to be brought into registration with one another, or with one distance mark that is brought into registration with a predetermined edge of catch 26.

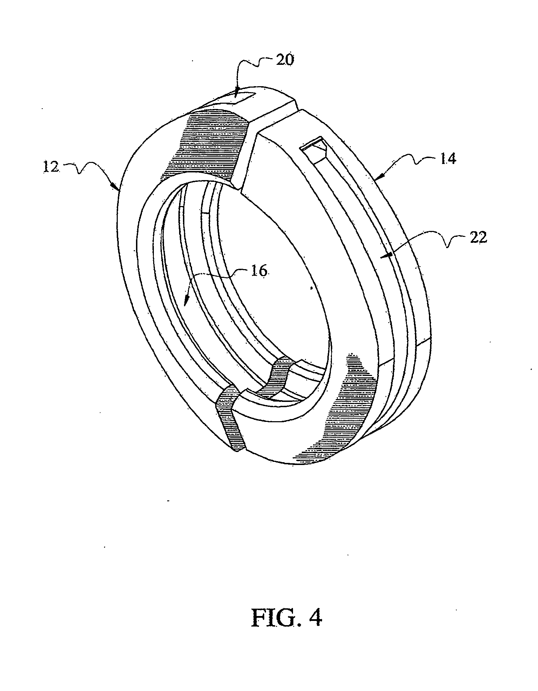

Fig. 4 depicts semicircular parts 12, 14 in spaced apart relation to one another with no flexible cable tie 24 in circumscribing relation thereto and with no sanitary fitting in circumscribed relation thereto. The purpose of Fig. 4 is to clarify the structure of said semicircular parts.

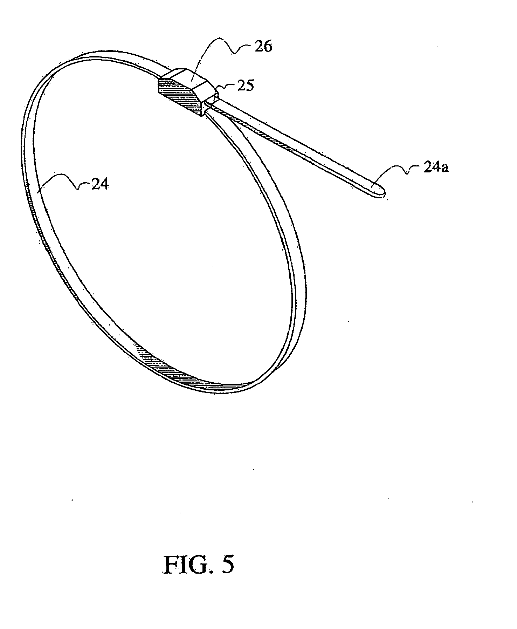

Fig. 5 depicts flexible cable tie 24 and catch 26 in isolation for the same purpose.

Figs. 6 and 7 are also provided to clarify structure.

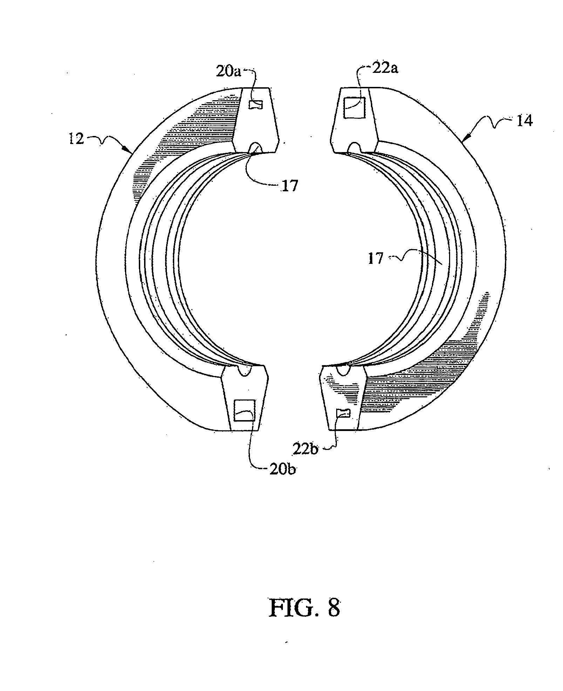

Fig. 8 depicts an embodiment having a different structure. In this second embodiment, the shape of interior channel 16 of the earlier embodiments is changed from a taper to an arch or to a semicircle and said second embodiment of said interior channel is denoted 17. As used herein, the term "arch-shaped" includes various arch and semicircular shapes. This expands the utility of the novel device to enable it to be used as a tubing retention device for holding flexible tubing onto a hose barb. The hose barb may be of the type with or without a circumferential ridge that mates with the channel of the clamp. The cable tie is threaded through the channels formed in clamp parts 12, 14 at their respective opposite ends. A calibrated cable tie-tensioning gun brings the cable to a set point on the cable tie or to a preselected tension point on the gun. This causes the exertion of an optimal amount of pressure that is equally distributed around the circumference of the tubing and the hose barb assembly.

Cable ties may be of the parallel entry type (as depicted in the drawings) or the perpendicular entry type. They may be formed of plastic, metal, both plastic and metal, or other suitable materials.

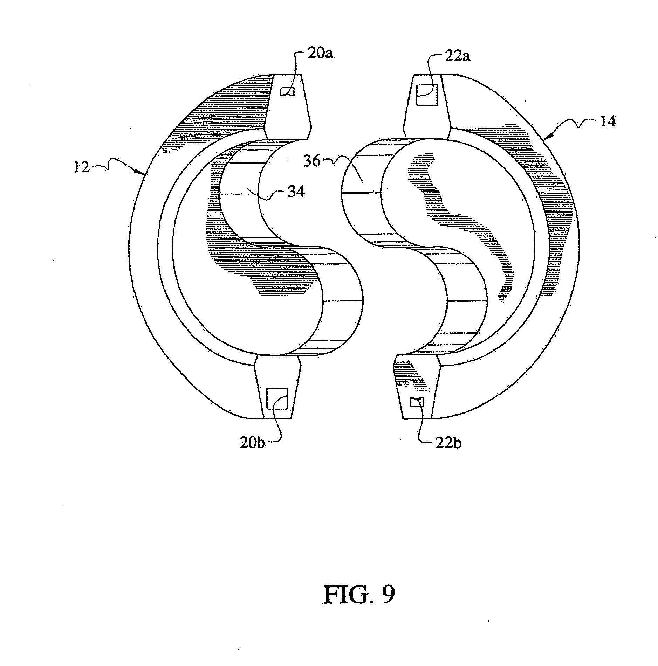

Cable ties are typically sold in boxed quantities of twenty-five (25) and an economically-disposable, limited use, non-calibrated cable tie tensioning gun is usually included. Such an inexpensive tool, used in conjunction with the novel cable ties having distance markers, is just as effective as an expensive, commercially available, calibrated cable tie gun for bringing the tension in a cable tie to a set force as indicated on the gun. There are no cable tie guns or torque wrenches that are economically disposable. In a third embodiment, depicted in Fig. 9, a pair of "S"-shaped lobes 34, 36 are inverted with respect to one another so that they mate with one another when the clamp is closed. Lobes 34, 36 capture flexible tubing that is positioned between them in a pinching action. More specifically, each lobe engages the flexible tubing along a transverse line of contact when such tubing is disposed in sandwiched relation between said lobes. Cable tie 24 is tightened by a predetermined amount in the way described above (*i*.*e*., by using a calibrated tension gun or by aligning predetermined distance markers on the cable) to ensure that a known clamping force is exerted against the tubing to completely close it or to partially reduce its diameter to throttle the flow of fluid therethrough. This ensures against application of an excessive clamping force that could permanently close the tubing.

Lobes 34, 36 may be of a geometrical configuration other than the depicted "S"-shaped lobes. For example, the lobes could meet one another along a flat mating surface. Any other suitable mating surface is acceptable as long as the opposed lobes, when converged toward one another by tightening of the novel sanitary fitting, produce a complete or partial closure of the flexible tubing to thereby provide a repeatable and accurate pressure relief valve for flexible tubing.

Now that the invention has been described,

## Claims

1. A clamp assembly (10) for a sanitary fitting, comprising:
an elongate, flexible cable tie (24);
a first semicircular clamp part (12);
said first semicircular clamp part (12) having an interior, concave side and an exterior, convex side;
a first exterior channel (20) formed in said exterior, convex side of said first semicircular clamp part (12);
a first inner channel (16) formed in said interior, concave side of said first semicircular clamp part (12);
said first inner channel (16) extending from a first end of said first semicircular clamp part (12) to a second end of said first semicircular clamp part (12);
a second semicircular clamp part (14);
said second semicircular clamp part (14) having an interior, concave side and an exterior, convex side;
a second exterior channel (22) formed in said exterior, convex side of said second semicircular clamp part (14);
a second inner channel (18) formed in said interior, concave side of said second semicircular clamp part (14);
said second inner channel (18) extending from a first end of said second semicircular clamp part to a second end of said second semicircular clamp part (14);
said first and second inner channels (16, 18) adapted to accommodate a flange of a sanitary fitting when said first and second semicircular parts (12, 14) are disposed in confronting relation to one another;
said elongate, flexible cable tie (24) having a length sufficient to circumscribe said first and second semicircular parts (12, 14) when said first and second semicircular parts (12, 14) are disposed in confronting relation to one another;
said elongate, flexible cable tie (24) having a cable tie catch (26) at a proximal end thereof and a free end at a distal end thereof;
said cable tie catch (26) adapted to slidingly receive said free end when said elongate, flexible cable tie (24) is disposed in circumscribing relation to said confronting first and second semicircular parts (12,14);
the clamp assembly being **characterised in that**
a first distance mark (25) is formed on said flexible cable tie (24) at a predetermined location thereon near said distal free end;
a second distance mark (25a) is formed on said clamp assembly (10) at a predetermined location;
said first distance mark (25) being in a predetermined registration with said second distance mark (25a) when said elongate, flexible cable tie (24) is under a predetermined amount of tension;
said elongate, flexible cable tie (24) received within said first and second exterior channels (22, 20) when said flexible cable tie (24) is disposed in said circumscribing relation to said first and second semicircular parts (12, 14);
a first belt loop (20a) is formed in said first exterior channel (20); and
a first belt loop (22a) is formed in said second exterior channel (22);
whereby the same amount of tension is consistently applied to said elongate, flexible cable tie (24) by tightening said cable tie (24) until said first and second distance marks (25, 25a) are in said registration with one another.

2. The clamp assembly (10) of claim 1, further comprising:
said second distance mark (25a) being on said flexible cable tie (10) near said proximal end thereof.

3. The clamp assembly (10) of claim 1, further comprising:
said second distance mark (25a) being a predetermined edge of said catch (26) so that said clamp (40) is optimally tightened when said first mark (25) is in alignment with said predetermined edge of said catch (26).

4. The clamp assembly (10) of claim 1, further comprising:
a second belt loop (20b) formed in said first exterior channel (20) in circumferentially spaced apart relation to said first belt loop (20a) formed in said first exterior channel (20);
a second belt loop (22b) formed in said second exterior channel (22) in circumferentially spaced apart relation to said first belt loop (22a) formed in said second exterior channel (22).

5. The clamp assembly (10) of claim 4, further comprising:
said first belt loop (20a) formed in said first exterior channel (20) adapted to receive said catch (26);
said second belt loop (20b) formed in said first exterior channel (20) adapted to receive said elongate, flexible cable tie (24).

6. The clamp assembly (10) of claim 4, further comprising:
said first belt loop (22a) formed in said second exterior channel (22) adapted to receive said catch (26);
said second belt loop (22b) formed in said second exterior channel (22) adapted to receive said elongate, flexible cable tie (24).

7. The clamp assembly (10) of claim 1, further comprising:
said first and second inner channels (14, 18) each having a flat bottom (16c, 18c) and opposed sidewalls that taper toward one another from top to bottom;
whereby a pair of axially aligned sanitary fittings are pushed in converging relation toward one another by said opposed sidewalls of said first and second inner channels when said confronting semicircular parts (12, 14) are pushed toward one another as said flexible cable tie (24) is tightened.

8. The clamp assembly (10) of claim 1, further comprising:
said first and second inner channels (16, 18) each having an arch-shape;
whereby a pair of axially aligned sanitary fittings are pushed in converging relation toward one another by said arch-shape of said first and second inner channels (16, 18) when said confronting semicircular parts (12, 14) are pushed toward one another as said flexible cable tie (24) is tightened.

## Patentansprüche

1. Klemmenanordnung (10) für eine Sanitärarmatur, umfassend:
einen länglichen, flexiblen Kabelbinder (24);
einen ersten halbkreisförmigen Klemmenteil (12);
wobei der erste halbkreisförmige Klemmenteil (12) eine innere, konkave Seite und eine äußere, konvexe Seite aufweist;
einen ersten äußeren Kanal (20), der in der äußeren, konvexen Seite des ersten halbkreisförmigen Klemmenteils (12) ausgebildet ist;
einen ersten inneren Kanal (16), der in der inneren, konkaven Seite des ersten halbkreisförmigen Klemmenteils (12) ausgebildet ist;
wobei der erste innere Kanal (16) von einem ersten Ende des ersten halbkreisförmigen Klemmenteils (12) zu einem zweiten Ende des ersten halbkreisförmigen Klemmenteils (12) verläuft;
einen zweiten halbkreisförmigen Klemmenteil (14);
wobei der zweite halbkreisförmige Klemmenteil (14) eine innere, konkave Seite und eine äußere, konvexe Seite aufweist;
einen zweiten äußeren Kanal (22), der in der äußeren, konvexen Seite des zweiten halbkreisförmigen Klemmenteils (14) ausgebildet ist;
einen zweiten inneren Kanal (18), der in der inneren, konkaven Seite des zweiten halbkreisförmigen Klemmenteils (14) ausgebildet ist;
wobei der zweite innere Kanal (18) von einem ersten Ende des zweiten halbkreisförmigen Klemmenteils zu einem zweiten Ende des zweiten halbkreisförmigen Klemmenteils (14) verläuft;
wobei der erste und zweite innere Kanal (16, 18) so ausgelegt sind, dass sie einen Flansch einer Sanitärarmatur aufnehmen, wenn der erste und zweite halbkreisförmige Teil (12, 14) in einer gegenüberliegenden Beziehung zueinander angeordnet sind;
wobei der längliche, flexible Kabelbinder (24) eine Länge aufweist, die ausreicht, dass der erste und zweite halbkreisförmige Teil (12, 14) umschrieben werden, wenn der erste und zweite halbkreisförmige Teil (12, 14) in einer gegenüberliegenden Beziehung zueinander angeordnet sind;
wobei der längliche, flexible Kabelbinder (24) eine Kabelbinder-Arretierungsvorrichtung (26) an einem proximalen Ende davon und ein freies Ende an einem distalen Ende davon aufweist;
wobei die Kabelbinder-Arretierungsvorrichtung (26) so ausgelegt ist, dass sie das freie Ende verschiebend aufnimmt, wenn der längliche, flexible Kabelbinder (24) in einer umschreibenden Beziehung zu dem ersten und zweiten halbkreisförmigen Teil (12, 14), die einander gegenüberliegen, angeordnet ist;
wobei die Klemmenanordnung **dadurch gekennzeichnet ist, dass** eine erste Abstandsmarkierung (25) an dem flexiblen Kabelbinder (24) an einer vorher festgelegten Stelle daran nahe dem distalen freien Ende ausgebildet ist;
eine zweite Abstandsmarkierung (25a) an der Klemmenanordnung (10) an einer vorher festgelegten Stelle ausgebildet ist;
die erste Abstandsmarkierung (25) eine vorher festgelegte Deckung mit der zweiten Abstandsmarkierung (25a) aufweist, wenn der längliche, flexible Kabelbinder (24) eine vorher festgelegte Spannung aufweist;
der längliche, flexible Kabelbinder (24) in dem ersten und zweiten äußeren Kanal (22, 20) aufgenommen ist, wenn der flexible Kabelbinder (24) in der umschreibenden Beziehung zu dem ersten und zweiten halbkreisförmigen Teil (12, 14) angeordnet ist;
eine erste Bandöse (20a) in dem ersten äußeren Kanal (20) ausgebildet ist; und
eine erste Bandöse (22a) in dem zweiten äußeren Kanal (22) ausgebildet ist;
wodurch einheitlich dasselbe Maß an Spannung an den länglichen, flexiblen Kabelbinder (24) angelegt wird, indem der Kabelbinder (24) festgezogen wird, bis sich die erste und zweite Abstandsmarkierung (25, 25a) in der Deckung miteinander befinden.

2. Klemmenanordnung (10) nach Anspruch 1, ferner umfassend:
dass sich die zweite Abstandsmarkierung (25a) an dem flexiblen Kabelbinder (10) nahe dem proximalen Ende davon befindet.

3. Klemmenanordnung (10) nach Anspruch 1, ferner umfassend:
dass es sich bei der zweiten Abstandsmarkierung (25a) um einen vorher festgelegten Rand der Arretierungsvorrichtung (26) handelt, sodass die Klemme (10) optimal festgezogen ist, wenn die erste Markierung (25) nach dem vorher festgelegten Rand der Arretierungsvorrichtung (26) ausgerichtet ist.

4. Klemmenanordnung (10) nach Anspruch 1, ferner umfassend:
eine zweite Bandöse (20b), die in dem ersten äußeren Kanal (20) in einer in Umfangsrichtung beabstandeten Beziehung zu der ersten Bandöse (20a) ausgebildet ist, die in dem ersten äußeren Kanal (20) ausgebildet ist;
eine zweite Bandöse (22b), die in dem zweiten äußeren Kanal (22) in Umfangsrichtung beabstandet zu der ersten Bandöse (22a) ausgebildet ist, die in dem zweiten äußeren Kanal (22) ausgebildet ist.

5. Klemmenanordnung (10) nach Anspruch 4, ferner umfassend:
dass die erste Bandöse (20a), die in dem ersten äußeren Kanal (20) ausgebildet ist, so ausgelegt ist, dass sie die Arretierungsvorrichtung (26) aufnimmt;
dass die zweite Bandöse (20b), die in dem ersten äußeren Kanal (20) ausgebildet ist, so ausgelegt ist, dass sie den länglichen, flexiblen Kabelbinder (24) aufnimmt.

6. Klemmenanordnung (10) nach Anspruch 4, ferner umfassend:
dass die erste Bandöse (22a), die in dem zweiten äußeren Kanal (22) ausgebildet ist, so ausgelegt ist, dass sie die Arretierungsvorrichtung (26) aufnimmt;
dass die zweite Bandöse (22b), die in dem zweiten äußeren Kanal (22) ausgebildet ist, so ausgelegt ist, dass sie den länglichen, flexiblen Kabelbinder (24) aufnimmt.

7. Klemmenanordnung (10) nach Anspruch 1, ferner umfassend:
dass der erste und zweite innere Kanal (16, 18) jeweils einen ebenen Boden (16c, 18c) und entgegengesetzte Seitenwände aufweisen, die von oben nach unten schmaler aufeinander zu verlaufen;
wodurch ein Paar axial ausgerichteter Sanitärarmaturen durch die entgegengesetzten Seitenwände des ersten und zweiten inneren Kanals in einer aufeinander zu verlaufenden Beziehung aufeinander zu geschoben werden, wenn die gegenüberliegenden halbkreisförmigen Teile (12, 14) aufeinander zu geschoben werden, wenn der flexible Kabelbinder (24) festgezogen wird.

8. Klemmenanordnung (10) nach Anspruch 1, ferner umfassend:
dass der erste und zweite innere Kanal (16, 18) jeweils eine Bogenform aufweisen;
wodurch ein Paar axial ausgerichteter Sanitärarmaturen durch die Bogenform des ersten und zweiten inneren Kanals (16, 18) in einer aufeinander zu verlaufenden Beziehung aufeinander zu geschoben werden, wenn die gegenüberliegenden halbkreisförmigen Teile (12, 14) aufeinander zu geschoben werden, wenn der flexible Kabelbinder (24) festgezogen wird.

## Revendications

1. Ensemble collier (10) pour un raccord sanitaire, comprenant :
une attache à câble souple allongée (24) ;
une première partie de collier semi-circulaire (12) ;
ladite première partie de collier semi-circulaire (12) ayant un côté intérieur concave et un côté extérieur convexe ;
un premier canal extérieur (20) formé sur ledit côté extérieur convexe de ladite première partie de collier semi-circulaire (12) ;
un premier canal intérieur (16) formé sur ledit côté intérieur concave de ladite première partie de collier semi-circulaire (12) ;
ledit premier canal intérieur (16) s'étendant d'une première extrémité de ladite première partie de collier semi-circulaire (12) à une seconde extrémité de ladite première partie de collier semi-circulaire (12) ;
une seconde partie de collier semi-circulaire (14) ;
ladite seconde partie de collier semi-circulaire (14) ayant un côté intérieur concave et un côté extérieur convexe ;
un second canal extérieur (22) formé sur ledit côté extérieur convexe de ladite seconde partie de collier semi-circulaire (14) ;
un second canal intérieur (18) formé sur ledit côté intérieur concave de ladite seconde partie de collier semi-circulaire (14) ;
ledit second canal intérieur (18) s'étendant d'une première extrémité de ladite seconde partie de collier semi-circulaire à une seconde extrémité de ladite seconde partie de collier semi-circulaire (14) ;
lesdits premier et second canaux intérieurs (16, 18) étant aptes à recevoir une bride d'un raccord sanitaire lorsque lesdites première et seconde parties semi-circulaires (12, 14) sont disposées dans une relation face à face l'une par rapport à l'autre ;
ladite attache à câble souple allongée (24) ayant une longueur suffisante pour entourer lesdites première et
seconde parties semi-circulaires (12, 14) lorsque lesdites première et seconde parties semi-circulaires (12, 14) sont disposées dans une relation face à face l'une par rapport à l'autre ;
ladite attache à câble souple allongée (24) ayant un taquet d'attache à câble (26) à une extrémité proximale de celle-ci et une extrémité libre à une extrémité distale de celle-ci ;
ledit taquet d'attache à câble (26) étant apte à recevoir de façon coulissante ladite extrémité libre lorsque ladite attache à câble souple allongée (24) est disposée dans une relation d'encerclement par rapport auxdites première et seconde parties semi-circulaires face à face (12, 14) ;
l'ensemble collier étant **caractérisé par le fait que** :
un premier repère de distance (25) est formé sur ladite attache à câble souple (24) à un emplacement prédéterminé sur celle-ci près de ladite extrémité libre distale ;
un second repère de distance (25a) est formé sur ledit ensemble collier (10) à un emplacement prédéterminé ;
ledit premier repère de distance (25) étant dans un alignement prédéterminé avec ledit second repère de distance (25a) lorsque ladite attache à câble souple allongée (24) est soumise à une grandeur de tension prédéterminée ;
ladite attache à câble souple allongée (24) étant reçue à l'intérieur desdits premier et second canaux extérieurs (22, 20) lorsque ladite attache à câble souple (24) est disposée dans ladite relation d'encerclement par rapport auxdites première et seconde parties semi-circulaires (12, 14) ;
un premier passant (20a) est formé dans ledit premier canal extérieur (20) ; et
un premier passant (22a) est formé dans ledit second canal extérieur (22a) ;
ce par quoi la même grandeur de tension est appliquée de manière constante sur ladite attache à câble souple allongée (24) par serage de ladite attache à câble (24) jusqu'à ce que lesdits premier et second repères de distance (25, 25a) soient dans ledit alignement l'un avec l'autre.

2. Ensemble collier (10) selon la revendication 1, comprenant en outre :
ledit second repère de distance (25a) est situé sur ladite attache à câble souple (10) près de ladite extrémité proximale de celle-ci.

3. Ensemble collier (10) selon la revendication 1, comprenant en outre :
ledit second repère de distance (25a) est un bord prédéterminé dudit taquet (26) de telle sorte que ledit collier (10) est serré de manière optimale lorsque ledit premier repère (25) est en alignement avec ledit bord prédéterminé dudit taquet (26).

4. Ensemble collier (10) selon la revendication 1, comprenant en outre :
un second passant (20b) formé dans ledit premier canal extérieur (20) dans une relation espacée de façon circonférentielle par rapport audit premier passant (20a) formé dans ledit premier canal extérieur (20) ;
un second passant (22b) formé dans ledit second canal extérieur (22) dans une relation espacée de façon circonférentielle par rapport audit premier passant (22a) formé dans ledit second canal extérieur (22).

5. Ensemble collier (10) selon la revendication 4, comprenant en outre :
ledit premier passant (20a) formée dans ledit premier canal extérieur (20) est apte à recevoir ledit taquet (26) ;
ledit second passant (20b) formé dans ledit premier canal extérieur (20) est apte à recevoir ladite attache à câble souple allongée (24).

6. Ensemble collier (10) selon la revendication 4, comprenant en outre :
ledit premier passant (22a) formé dans ledit second canal extérieur (22) est apte à recevoir ledit taquet (26) ;
ledit second passant (22b) formé dans ledit second canal extérieur (22) est apte à recevoir ladite attache à câble souple allongée (24).

7. Ensemble collier (10) selon la revendication 1, comprenant en outre :
lesdits premier et second canaux intérieurs (16, 18) ont chacun un fond plat (16c, 18c) et des parois latérales opposées qui s'effilent l'une vers l'autre de la partie supérieure vers le fond ;
ce par quoi une paire de raccords sanitaires alignés axialement sont poussés dans une relation convergente l'un vers l'autre par lesdites parois latérales opposées desdits premier et second canaux intérieurs lorsque lesdites parties semi-circulaires face à face (12, 14) sont poussées l'une vers l'autre à mesure que ladite attache à câble souple (24) est serrée.

8. Ensemble collier (10) selon la revendication 1, comprenant en outre :
lesdits premier et second canaux intérieurs (16, 18) ont chacun une forme d'arc ;
ce par quoi une paire de raccords sanitaires alignés axialement sont poussés dans une relation convergente l'un vers l'autre par ladite forme d'arc desdits premier et second canaux intérieurs (16, 18) lorsque lesdites parties semi-circulaires face à face (12, 14) sont poussées l'une vers l'autre à mesure que ladite attache à câble souple (24) est serrée.
